# EUROPEAN PATENT SPECIFICATION

(11) **EP 2 536 016 B1**
(45) Date of publication and mention of the grant of the patent: **13.01.2021**
(21) Application number: 12171290.5
(22) Date of filing: 08.06.2012
(51) Int. Cl.: H02M 7/00, H02M 7/162, H02M 7/487, H02M 7/219

(54) **Switching branch for three-level rectifier, and three-phase three-level rectifier**
Stromrichterzweig für dreistufigen Gleichrichter und dreiphasiger, dreistufiger Gleichrichter
Branche de commutation pour redresseur à trois niveaux et redresseur à trois niveaux triphasé

(30) Priority: 15.06.2011 FI 20115600
(43) Date of publication of application: 19.12.2012
(73) Proprietor: ABB Schweiz AG, 5400 Baden (CH)
(72) Inventor: Viitanen, Tero, 00380 Helsinki (FI)
(74) Representative: Kolster Oy Ab

(56) References cited:
- EP-A1- 1 953 910
- DE-U1-202010 012 983
- JUN LI ET AL: "Application of active NPC converter on generator side for MW direct-driven wind turbine", APPLIED POWER ELECTRONICS CONFERENCE AND EXPOSITION (APEC), 2010 TWENTY-FIFTH ANNUAL IEEE, IEEE, PISCATAWAY, NJ, USA, 21 February 2010 (2010-02-21), pages 1010-1017, XP031649581, ISBN: 978-1-4244-4782-4
- BERNET S ET AL: "The Active NPC Converter and Its Loss-Balancing Control", IEEE TRANSACTIONS ON INDUSTRIAL ELECTRONICS, IEEE SERVICE CENTER, PISCATAWAY, NJ, USA, vol. 52, no. 3, 1 June 2005 (2005-06-01), pages 855-868, XP011133065, ISSN: 0278-0046, DOI: 10.1109/TIE.2005.847586
- GONG G ET AL: "Comparative evaluation of three-phase high power factor AC-DC converter concepts for application in future more electric aircrafts", 2004 IEEE APPLIED POWER ELECTRONICS CONFERENCE AND EXPOSITION, APEC 04, IEEE, ANAHEIM, CA, USA, vol. 2, 22 February 2004 (2004-02-22), pages 1152-1159, XP010704185, DOI: 10.1109/APEC.2004.1295968 ISBN: 978-0-7803-8269-5

## Description

### Field of the invention

The invention relates to a switching branch for a three-level rectifier, and to a three-phase, three-level rectifier.

### Background of the invention

Three-level rectifiers are rectifiers comprising three direct voltage poles. They not only have a positive and negative direct voltage pole, but also a neutral direct voltage pole. Examples of three-level rectifiers are disclosed in publications Y. Zhao, Y. Li and T.A. Lipo, "Force commutated three level boost type rectifier", IEEE transactions on industry applications, Vol. 31, No. 1, January/February 1995, and J.W. Kolar and F.C. Zach, "A novel three-phase utility interface minimizing line current harmonics of high-power telecommunications rectifier modules", IEEE transactions on industrial electronics, Vol. 44, No. 4, August 1997.

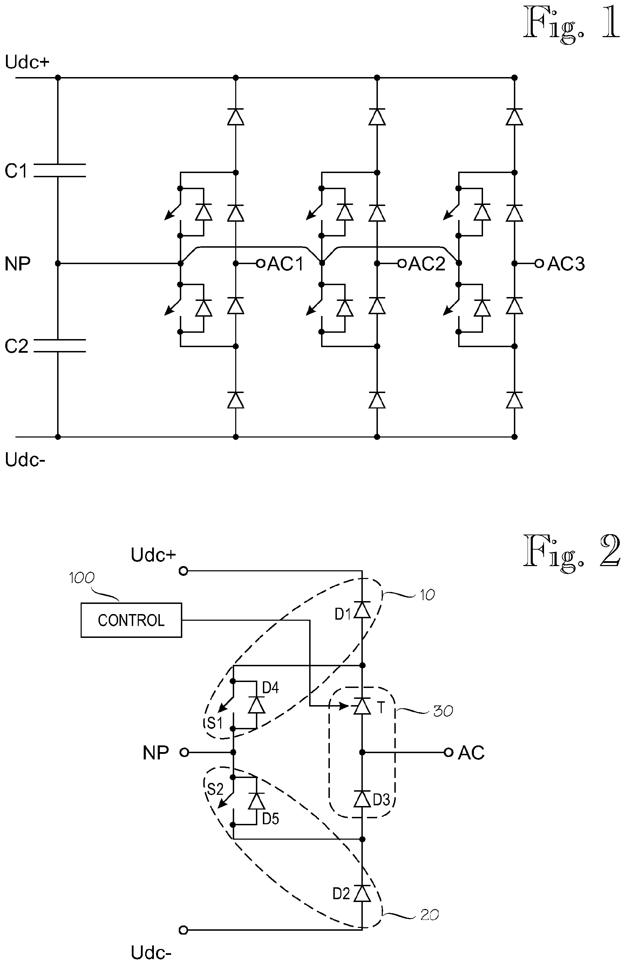

Figure 1 shows a circuit diagram of the main circuit of a three-phase three-level rectifier. The described rectifier comprises three switching branches, each of which has one alternating voltage input pole AC1, AC2, AC3. The direct voltage output, in turn, consists of three poles: a positive direct voltage pole Udc+, negative direct voltage pole Udc-, and neutral direct voltage pole NP. A direct voltage intermediate circuit of the rectifier, in turn, comprises capacitors C1 and C2 connected in series between the positive direct voltage pole Udc+ and the negative direct voltage pole Udc- in such a manner that the neutral direct voltage pole NP is formed at the connecting point of the capacitors. Each switching branch of the rectifier further comprises four diodes connected in series between the positive and negative direct voltage poles and two controllable switches that modulate the input voltage according to a given modulation method. Possible modulation methods include e.g. vector modulation and hysteresis modulation. The upper switch in each switching branch then commutates with the topmost diode connected in series, and the lower switch commutates with the lowest diode connected in series in accordance with the modulation plan. In the example of the figure, a diode is also connected in parallel to each controlled switch.

Typically, the capacitors in the direct voltage intermediate circuit of the rectifier are to be charged before normal use of the rectifier. Charging of the capacitors may be performed, for instance, by means of a contactor and a charging resistor in such a manner that in the charging stage the capacitor charging current is connected by means of the contactor to circulate via the charging resistor, which limits the charging current. A problem with this solution is, for instance, that it requires a separate contactor.

### Brief description of the invention

An object of the invention is to develop equipment so as to solve or at least alleviate the above-mentioned problem. The object of the invention is achieved by a switching branch for a three-level rectifier and by a three-phase, three-level rectifier, which are characterized by what is stated in the independent claims. Preferred embodiments of the invention are disclosed in the dependent claims.

The invention is based on the fact that in a switching branch for a three-level converter a diode connected between a second semiconductor switch and an alternating voltage pole is replaced by a thyristor. Moreover, the semiconductors are positioned in semiconductor modules in a manner that minimizes stray inductance of a commutation circuit.

The solution of the invention has an advantage that the charging of the capacitors in the direct voltage intermediate circuit of the rectifier does not require a contactor but the capacitors in the intermediate circuit can be charged, for instance, by changing a control angle of the thyristor or via a resistor-diode branch in parallel with the thyristor. In addition, in a fault situation, removal of the thyristor control signal breaks the fault current substantially immediately when the direction of the current tends to change, which enhances the protection of the rectifier equipment. Also, the stray inductance of the commutation circuit can be minimized.

### Brief description of the figures

The invention will be described in greater detail in connection with some embodiments, with reference to the accompanying drawings, in which:
Figure 1 shows an example of the main circuit of a three-phase rectifier;
Figure 2 shows an example of a switching branch for a rectifier according to an embodiment;
Figure 3 shows an example of a switching branch for a rectifier according to an embodiment;
Figure 4 shows an example of a switching branch for a rectifier according to an embodiment;
Figure 5 shows an example of a switching branch for a rectifier according to an embodiment; and
Figure 6 shows an example of the main circuit of a three-phase rectifier according to an embodiment.

### Detailed description of the invention

The application of the invention is not restricted to any specific system, but it may be applied to various electric systems. In addition, the use of the invention is not restricted to any system utilizing a specific basic frequency or to any specific voltage level.

Figure 2 shows a circuit diagram of a switching branch for a three-level rectifier in accordance with an embodiment. It should be noted that the figure only presents elements relevant to the understanding of the invention. The switching branch may be one switching branch of a three-phase rectifier or a switching branch of a one-phase rectifier. The switching branch of Figure 2 comprises an alternating voltage input pole AC for connecting the switching branch to an alternating voltage output (not shown), and a positive direct voltage pole Udc+, negative direct voltage pole Udc- and neutral direct voltage pole NP. Further, the switching branch comprises a first diode D1 and a first controllable semiconductor switch S1, which is connected in series between the positive direct voltage pole Udc+ and the neutral direct voltage pole NP. Further, the switching branch comprises a second diode D2 and a second controllable semiconductor switch S2, which is connected in series between the negative direct voltage pole Udc- and the neutral direct voltage pole NP. The semiconductor switches S1, S2 may be transistors, such as IGBT (insulated Gate Bipolar Transistor) or FET (Field-Effect Transistor), or other semiconductor switches. The control components and couplings of the semiconductor switches S1, S2 are not shown in the figure for the sake of clarity. Further, the switching branch comprises a thyristor T and a third diode D3 connected in series between a connection point between the first diode D1 and the first semiconductor switch S1 and a connection point of the second diode D2 and the second semiconductor S2 in such a manner that the connection point between the thyristor T and the third diode D3 is connected to the alternating voltage pole AC of the switching branch. In the example of Figure 2, the thyristor T is connected between the connection point between the first diode D1 and the first semiconductor switch S1 and the alternating voltage pole AC of the switching branch, and the third diode D3 is connected between the connection point between the second diode D2 and the second semiconductor switch S2 and the alternating voltage pole AC of the switching branch. The switching branch may further comprise a fourth diode D4, which is connected in parallel with the first semiconductor switch S1, and a fifth diode D5, which is connected in parallel with the second semiconductor switch S2, as shown in the figure. The switching branch may also comprise a control unit 100 or corresponding control means for controlling the thyristor T through appropriate control signals that are transmitted to a thyristor gate.

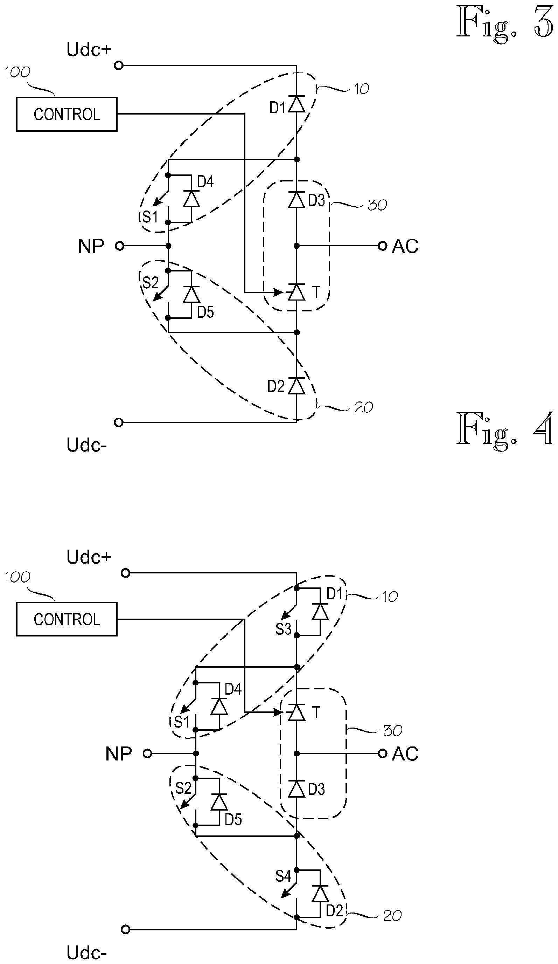

Figure 3 shows a circuit diagram of a switching branch for a three-level rectifier in accordance with an embodiment. The example of the switching branch shown in Figure 3 corresponds to the example of the switching branch shown in Figure 2 in all other respects but in the switching branch of Figure 3 the thyristor T is connected between the connection point between the second diode D2 and the second semiconductor switch S2 and the alternating voltage pole AC of the switching branch, and the third diode D3 is connected between the connection point between the first diode D1 and the first semiconductor switch S1 and the alternating voltage pole AC of the switching branch.

According to an embodiment, the first diode D1 and the first semiconductor switch S1 of the switching branch reside in a first switching branch-specific semiconductor module 10, and the second diode D2 and the second semiconductor switch S2 of the switching branch reside in a second switching branch-specific semiconductor module 20. According to an embodiment, also a third diode of the switching branch and the thyristor reside in a third switching branch-specific semiconductor module 30. Further, according to an embodiment, the fourth diode D4 of the switching branch resides in the first switching branch-specific semiconductor module, and the fifth diode D5 resides in the second switching branch-specific semiconductor module 20. In this context, the semiconductor module refers generally to a module that comprises several semiconductor elements arranged on a common substrate and interconnected electrically in a suitable manner. By positioning the semiconductors in semiconductor modules in this manner it is possible to minimize stray inductance of a commutation circuit. The first semiconductor module 10 and the second semiconductor module 20 in the example of Figure 3 may be implemented by means of braking chopper modules. The third semiconductor module 30 may be implemented by means of a semi-controlled thyristor branch. Figure 4 shows a circuit diagram of a switching branch for a three-level rectifier in accordance with an embodiment. The example of Figure 4 also comprises a third semiconductor switch S3, which is connected in parallel with the first diode D1, and a fourth semiconductor switch S4, which is connected in parallel with the second diode D2. The third semiconductor switch resides in the first semiconductor module 10, and the fourth semiconductor switch resides in the second semiconductor module 20. The first semiconductor module 10 and the second semiconductor module 20 in the example of Figure 4 may be implemented by means of IGBT duals.

Initial charging of the capacitors C1, C2 in the rectifier intermediate circuit may be performed, for instance in the case of the switching branch examples of Figures 2 to 4, by means of phase angle control of the thyristor T. According to an embodiment, control means, such as a control unit 100, of the thyristor T are arranged to change a thyristor control angle during the charging of the rectifier intermediate circuit in response to the voltage of the rectifier intermediate circuit and the supply voltage of the rectifier. Accordingly, the control angle of the thyristor T, i.e. the angle at which the thyristor is fired delayed from the earliest possible firing moment, is changed in response to the voltage of the rectifier intermediate circuit and the supply voltage of the rectifier so as to limit the charging current of the intermediate circuit. According to an embodiment, the control unit 100 is arranged to change a control angle of the thyristor T in response to the ratio or difference between the voltage value of the rectifier intermediate circuit and the supply voltage value of the rectifier. Initially, the control angle may be e.g. 180 degrees, i.e. the firing of the thyristor T is delayed 180 degrees from the earliest possible firing moment, and thereafter, as the intermediate circuit voltage rises, and consequently, as the ratio or difference between the intermediate circuit voltage value and the rectifier supply voltage value changes, the control angle of the thyristor T is reduced gradually. The intermediate circuit voltage having risen sufficiently high, the charging of the intermediate circuit may be ended and the thyristor T may be controlled to a diode mode, i.e. in practice, to a continuously conductive state, whereby it operates like a diode. Advantageously, the control unit 100 of the thyristor is arranged to control the thyristor T to the diode mode, when the intermediate circuit of the rectifier is not charged.

According to an embodiment, the thyristor T may be controlled to a non-conductive state in response to a detected fault situation. The control unit 100 of the thyristor may thus be arranged to control the thyristor T to a non-conductive state in response to the detection of a fault state. Such a fault state may occur, for instance, in the switching branch of the rectifier, elsewhere in the rectifier or in a device connected to the rectifier, such as a device supplied by the rectifier, or in an alternating voltage feed that feeds the rectifier. An example of the fault situation is a fault in a rectifier component, or a short circuit or an earth fault in any one of the rectifier parts. A fault situation may be detected, for instance, by means of particular fault diagnostics functionality, which monitors the operation of the switching branch of the rectifier or that of the whole rectifier and detects if discrepancies from normal operation occur. Fault diagnostics functionality of this kind may be incorporated in the control unit 100 of the thyristor or implemented by one or more separate units (not shown).

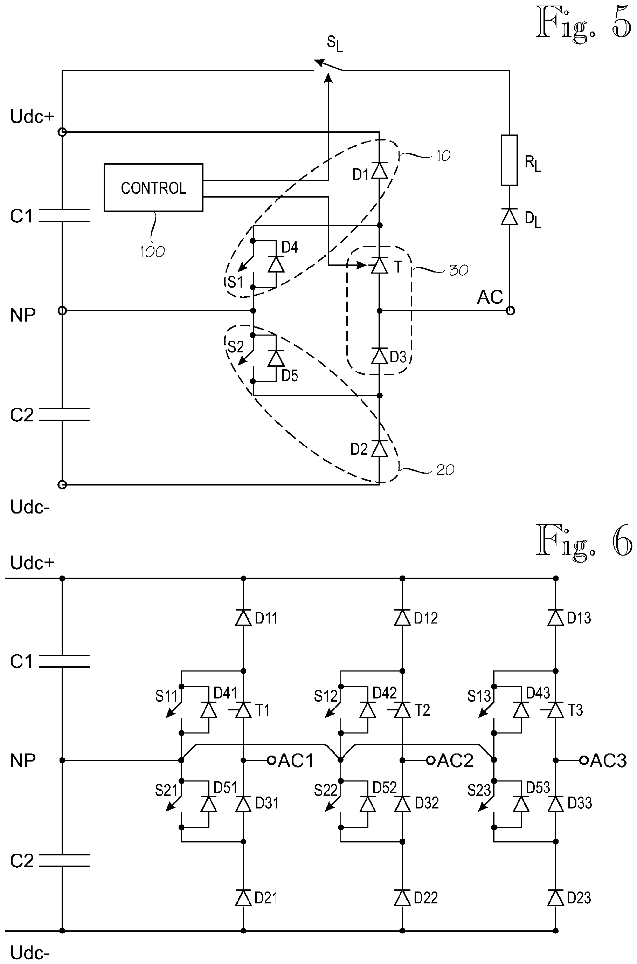

The initial charging of the capacitors C1, C2 of the rectifier intermediate circuit may also be carried out in another manner. Figure 5 shows a circuit diagram of a switching branch for a three-level rectifier in accordance with an embodiment. The switching branch of the example in Figure 5 also comprises charging means for charging the rectifier intermediate circuit. In accordance with the example of Figure 5, the charging means may comprise e.g. a charging diode D_{L} and a charging resistor R_{L}, which are connected between the alternating voltage pole and the positive direct voltage pole of the switching branch, as well as a controllable switch S_{L}, such as a relay or a semiconductor switch. In the embodiment of Figure 5, the control unit 100 is arranged to control the switch S_{L} to be conductive and the thyristor T to a non-conductive state during the charging of the rectifier intermediate circuit. When the voltage in the intermediate circuit has risen sufficiently high and the charging of the intermediate circuit can be ended, the control unit 100 is arranged to control the switch S_{L} to a non-conductive state and the thyristor T to a continuously conductive state.

According to an embodiment, the three-phase three-level converter may be implemented by interconnecting the three above-described switching branches of any one of the embodiments. Figure 6 shows a simplified circuit diagram of a main circuit of a rectifier, the main circuit being formed of three phase-specific switching branches of Figure 2 interconnected by connecting the positive direct voltage pole Udc+, negative direct voltage pole Udc- and neutral direct voltage pole NP of each switching branch. Each switching branch correspondingly has alternating voltage input poles AC1, AC2, AC3 for connecting the rectifier to the three phases of the three-phase alternating voltage output (not shown). Each switching branch further comprises a first diode D11, D12, D13 and a second diode D21, D22, D23, as well as a third diode D31, D32, D33 and a thyristor T1, T2, T3 that are connected in the manner shown above in connection with Figure 2. In addition, each switching branch comprises a first controllable semiconductor switch S11, S12, S13 and a second semiconductor switch S21, S22, S23 that are also connected in the manner shown above in connection with Figure 2. The control components and couplings of the thyristors or semiconductor switches are not shown in the figure for the sake of clarity. Each switching branch of the rectifier of Figure 6 may also comprise a fourth diode D41, D42, D43 and a fifth diode D51, D52, D53, as shown in the figure. A direct voltage intermediate circuit of the rectifier of Figure 6, in turn, comprises capacitors C1 and C2 connected in series between the positive direct voltage pole Udc+ and negative direct voltage pole Udc- in such a manner that the neutral direct voltage pole NP is formed at the connecting point of the capacitors. The structure of the intermediate circuit may also differ from that shown in the figure.

The equipment, such as control unit 100, implementing the above-mentioned various functionalities and various combinations thereof, may be implemented by means of one or more units. The term "unit" refers generally to a physical or logic whole, such as a physical device, a part thereof or a software routine.

The equipment, such as the control unit 100, implementing the functionality of the various embodiments, may be implemented at least partly by means of a computer or the like signal processing equipment having appropriate software. An example of suitable signal processing equipment is a programmable logic controller (PLC). Such a computer or signal processing equipment advantageously comprises at least a random access memory (RAM), which provides a storage area that arithmetic operations utilize, and a processor (CPU), such as a general-purpose digital signal processing processor (DSP), which performs the arithmetic operations. The processor may comprise a set of registers, an arithmetic logic unit and a processor control unit. The processor control unit is controlled with a program command sequence that is transferred to the processor from the random access memory. The processor control unit may comprise micro commands for basic operations. Implementation of the micro commands may vary depending on the structure of the processor. The program commands may be encoded in a programming language, which may be a high-level programming language, such as C, Java or the like, or a lower-level programming language, such as a machine language or an assembler. The computer may also comprise an operating system, which may provide system services for a computer program written with program commands. The computer or other equipment implementing the invention or a part thereof, such as control unit 100 or the like, may comprise suitable input means, for instance, for receiving control information or measuring information from the user and/or other devices, and output means, for instance, for outputting alarms and notices and/or control data as well as for controlling other devices. The equipment may additionally comprise a suitable user interface, through which the user may set required parameters, for instance. It is also possible to use specific integrated circuits, such as ASICs (Application Specific Integrated Circuits) and/or discrete components or other devices so as to implement various embodiment functionalities in accordance with different embodiments.

The above-described different embodiments may be implemented in the existing systems, such as electric drives or components thereof, such as rectifiers or frequency converters, and/or it is possible to use separate elements and devices in a centralized or distributed manner. Existing devices for electric drives, such as rectifiers and frequency converters, typically comprise a processor and memory that may be utilized in implementing the functionality of the different embodiments. Thus, all alterations and configurations required to implement the different embodiments of the invention may be performed at least partly using software routines that in turn may be implemented as added or updated software routines. If the functionalities of the different embodiments are implemented by means of software, the software may be provided as a computer program product that comprises a computer program code, the execution of which on a computer makes the computer or corresponding hardware perform the functionality of the invention in accordance with the above-described different embodiments. This type of computer program code may be stored or generally incorporated in a computer-readable medium, such as a suitable storage medium, for instance a flash memory or optical memory, from which it may be read to a unit or units that execute the program code. In addition, this type of program code may be loaded onto a unit or units for execution over a suitable data network, and it may replace or update a possibly existing program code.

## Claims

1. A switching branch for a three-level rectifier, comprising:
a first diode (D1; D11, D12, D13) and a first semiconductor switch (S1; S11, S12, S13) connected in series between a positive direct voltage pole (Udc+) and a neutral direct voltage pole (NP);
a second diode (D2; D21, D22, D23) and a second semiconductor switch (S2; S21, S22, S23) connected in series between a negative direct voltage pole (Udc-) and a neutral direct voltage pole (NP); and
a thyristor (T; T1, T2, T3) and a third diode (D3, D31, D32, D33) connected in series between a connection point between the first diode and the first semiconductor switch and a connection point between the second diode and the second semiconductor switch, wherein a connection point between the thyristor (T; T1, T2, T3) and the third diode (D3, D31, D32, D33) is connected to an alternating voltage pole (AC; AC1, AC2, AC3) of the switching branch, wherein
the first diode (D1; D11, D12, D13) and the first semiconductor switch (S1; S11, S12, S13) reside in a first switching branch-specific semiconductor module (10); and
the second diode (D2; D21, D22, D23) and the second semiconductor switch (S2; S21, S22, S23) reside in a second switching branch-specific semiconductor module (20), and wherein either
the thyristor (T; T1, T2, T3) is connected between the connection point between the first diode and the first semiconductor switch and the alternating voltage pole (AC; AC1, AC2, AC3) of the switching branch; and
the third diode (D3; D31, D32, D33) is connected between the connection point between the second diode and the second semiconductor switch and the alternating voltage pole (AC; AC1, AC2, AC3) of the switching branch,
wherein an anode of the thyristor is connected to a cathode of the third diode,
or
the thyristor (T; T1, T2, T3) is connected between the connection point between the second diode and the second semiconductor switch and the alternating voltage pole (AC; AC1, AC2, AC3) of the switching branch; and
the third diode (D3; D31, D32, D33) is connected between the connection point between the first diode and the first semiconductor switch and the alternating voltage pole (AC; AC1, AC2, AC3) of the switching branch,
wherein a cathode of the thyristor is connected to an anode of the third diode.

2. The switching branch for the rectifier of claim 1, **characterized in that** the thyristor (T; T1, T2, T3) and the third diode (D3, D31, D32, D33) reside in a third switching branch-specific semiconductor module (30).

3. The switching branch for the rectifier of any one of claims 1 to 2, **characterized in that** the switching branch also comprises:
a fourth diode (D4; D41, D42, D43) connected in parallel with the first semiconductor switch (S1; S11, S12, S13); and
a fifth diode (D5; D51, D52, D53) connected in parallel with the second semiconductor switch (S2; S21, S22, S23).

4. The switching branch for the rectifier of claim 3, **characterized in that**
the fourth diode (D4; D41, D42, D43) resides in the first switching branch-specific semiconductor module (10); and
the fifth diode (D5; D51, D52, D53) resides in the second switching branch-specific semiconductor module (20).

5. The switching branch for the rectifier of any one of claims 1 to 4, **characterized in that** the switching branch also comprises:
a third semiconductor switch (S3) connected in parallel with the first diode; and
a fourth semiconductor switch (S4) connected in parallel with the second diode.

6. The switching branch for the rectifier of claim 5, **characterized in that**
the third semiconductor switch (S3) resides in the first switching branch-specific semiconductor module (10); and
the fourth semiconductor switch (S4) resides in the second switching branch-specific semiconductor module (20).

7. The switching branch for the rectifier of any one of claims 1 to 6, **characterized in that** the switching branch also comprises:
control means (100) arranged to change a control angle of the thyristor (T; T1, T2, T3) during the charging of the rectifier intermediate circuit in response to the voltage of the rectifier intermediate circuit and the supply voltage of the rectifier.

8. The switching branch for the rectifier of claim 7, **characterized in that** the control means (100) are arranged to change the control angle of the thyristor (T; T1, T2, T3) in response to a ratio or difference of the voltage value of the rectifier intermediate circuit and the supply voltage value of the rectifier.

9. The switching branch for the rectifier of any one of claims 1 to 7, **characterized in that** the switching branch also comprises:
charging means (D_{L}, R_{L}, S_{L}) for charging the rectifier intermediate circuit; and
control means (100) arranged to control the thyristor (T; T1, T2, T3) to a non-conductive state during the charging of the rectifier intermediate circuit.

10. The switching branch for the rectifier of any one of claims 7 to 9, **characterized in that** the control means (100) are arranged to control the thyristor (T; T1, T2, T3) to a diode mode, when the rectifier intermediate circuit is not charged.

11. The switching branch for the rectifier of any one of claims 7 to 10, **characterized in that** the control means (100) are arranged to control the thyristor (T; T1, T2, T3) to a non-conductive state in response to a detected fault state.

12. A three-phase three-level rectifier, which comprises three switching branches according to any one of claims 1 to 11.

13. The rectifier of claim 12, **characterized in that** the positive direct voltage poles (Udc+) of each switching branch are interconnected, and the negative direct voltage poles (Udc-) of each switching branch are interconnected and the neutral direct voltage poles (NP) of each switching branch are interconnected.

## Patentansprüche

1. Schaltzweig für einen Dreipunkt-Gleichrichter, umfassend:
eine erste Diode (D1; D11, D12, D13) und einen ersten Halbleiterschalter (S1; S11, S12, S13), die zwischen einen positiven Gleichspannungspol (Udc+) und einen neutralen Gleichspannungspol (NP) in Reihe geschaltet sind;
eine zweite Diode (D2; D21, D22, D23) und einen zweiten Halbleiterschalter (S2; S21, S22, S23), die zwischen einen negativen Gleichspannungspol (Udc-) und einen neutralen Gleichspannungspol (NP) in Reihe geschaltet sind; und
einen Thyristor (T; T1, T2, T3) und eine dritte Diode (D3, D31, D32, D33), die zwischen einen Verbindungspunkt zwischen der ersten Diode und dem ersten Halbleiterschalter und einem Verbindungspunkt zwischen der zweiten Diode und dem zweiten Halbleiterschalter in Reihe geschaltet sind, wobei ein Verbindungspunkt zwischen dem Thyristor (T; T1, T2, T3) und der dritten Diode (D3, D31, D32, D33) mit einem Wechselspannungspol (AC; AC1, AC2, AC3) des Schaltzweigs verbunden ist, wobei die erste Diode (D1; D11, D12, D13) und der erste Halbleiterschalter (S1; S11, S12, S13) sich in einem ersten schaltzweigspezifischen Halbleitermodul (10) befinden; und
die zweite Diode (D2; D21, D22, D23) und der zweite Halbleiterschalter (S2; S21, S22, S23) sich in einem zweiten schaltzweigspezifischen Halbleitermodul (20) befinden, und wobei entweder
der Thyristor (T; T1, T2, T3) zwischen den Verbindungspunkt zwischen der ersten Diode und dem ersten Halbleiterschalter und den Wechselspannungspol (AC; AC1, AC2, AC3) des Schaltzweigs geschaltet ist; und
die dritte Diode (D3; D31, D32, D33) zwischen den Verbindungspunkt zwischen der zweiten Diode und dem zweiten Halbleiterschalter und den Wechselspannungspol (AC; AC1, AC2, AC3) des Schaltzweigs geschaltet ist,
wobei eine Anode des Thyristors mit einer Kathode der dritten Diode verbunden ist,
oder
der Thyristor (T; T1, T2, T3) zwischen den Verbindungspunkt zwischen der zweiten Diode und dem zweiten Halbleiterschalter und den Wechselspannungspol (AC; AC1, AC2, AC3) des Schaltzweigs geschaltet ist; und die dritte Diode (D3; D31, D32, D33) zwischen den Verbindungspunkt zwischen der ersten Diode und dem ersten Halbleiterschalter und den Wechselspannungspol (AC; AC1, AC2, AC3) des Schaltzweigs geschaltet ist,
wobei eine Kathode des Thyristors mit einer Anode der dritten Diode verbunden ist.

2. Schaltzweig für den Gleichrichter nach Anspruch 1, **dadurch gekennzeichnet, dass** der Thyristor (T; T1, T2, T3) und die dritte Diode (D3, D31, D32, D33) sich in einem dritten schaltzweigspezifischen Halbleitermodul (30) befinden.

3. Schaltzweig für den Gleichrichter nach einem der Ansprüche 1 bis 2, **dadurch gekennzeichnet, dass** der Schaltzweig außerdem umfasst:
eine vierte Diode (D4; D41, D42, D43), die zum ersten Halbleiterschalter (S1; S11, S12, S13) parallel geschaltet ist; und
eine fünfte Diode (D5; D51, D52, D53) die zum zweiten Halbleiterschalter (S2; S21, S22, S23) parallel geschaltet ist.

4. Schaltzweig für den Gleichrichter nach Anspruch 3, **dadurch gekennzeichnet, dass**
die vierte Diode (D4; D41, D42, D43) sich im ersten schaltzweigspezifischen Halbleitermodul (10) befindet; und
die fünfte Diode (D5; D51, D52, D53) sich im zweiten schaltzweigspezifischen Halbleitermodul (20) befindet.

5. Schaltzweig für den Gleichrichter nach einem der Ansprüche 1 bis 4, **dadurch gekennzeichnet, dass** der Schaltzweig außerdem umfasst:
einen dritten Halbleiterschalter (S3), der zur ersten Diode parallel geschaltet ist; und
einen vierten Halbleiterschalter (S4), der zur zweiten Diode parallel geschaltet ist.

6. Schaltzweig für den Gleichrichter nach Anspruch 5, **dadurch gekennzeichnet, dass**
der dritte Halbleiterschalter (S3) sich im ersten schaltzweigspezifischen Halbleitermodul (10) befindet; und
der vierte Halbleiterschalter (S4) sich im zweiten schaltzweigspezifischen Halbleitermodul (20) befindet.

7. Schaltzweig für den Gleichrichter nach einem der Ansprüche 1 bis 6, **dadurch gekennzeichnet, dass** der Schaltzweig außerdem umfasst:
Steuermittel (100), die so ausgelegt sind, dass sie einen Steuerwinkel des Thyristors (T; T1, T2, T3) während des Ladens des Gleichrichterzwischenkreises in Reaktion auf die Spannung des Gleichrichterzwischenkreises und die Versorgungsspannung des Gleichrichters ändern.

8. Schaltzweig für den Gleichrichter nach Anspruch 7, **dadurch gekennzeichnet, dass** die Steuermittel (100) so ausgelegt sind, dass sie den Steuerwinkel des Thyristors (T; T1, T2, T3) in Reaktion auf ein Verhältnis oder eine Differenz des Spannungswerts des Gleichrichterzwischenkreises und des Versorgungsspannungswerts des Gleichrichters ändern.

9. Schaltzweig für den Gleichrichter nach einem der Ansprüche 1 bis 7, **dadurch gekennzeichnet, dass** der Schaltzweig außerdem umfasst:
Lademittel (D_{L}, R_{L}, S_{L}) zum Laden des Gleichrichterzwischenkreises; und
Steuermittel (100), die so ausgelegt sind, dass sie den Thyristor (T; T1, T2, T3) während des Ladens des Gleichrichterzwischenkreises in einen nichtleitenden Zustand steuern.

10. Schaltzweig für den Gleichrichter nach einem der Ansprüche 7 bis 9, **dadurch gekennzeichnet, dass** die Steuermittel (100) ausgelegt sind, dass sie den Thyristor (T; T1, T2, T3) in einen Diodenmodus steuern, wenn der Gleichrichterzwischenkreis nicht geladen wird.

11. Schaltzweig für den Gleichrichter nach einem der Ansprüche 7 bis 10, **dadurch gekennzeichnet, dass** die Steuermittel (100) so ausgelegt sind, dass sie den Thyristor (T; T1, T2, T3) in Reaktion auf einen erkannten Fehlerzustand in einen nichtleitenden Zustand steuern.

12. Dreiphasiger Dreipunkt-Gleichrichter, der drei Schaltzweige nach einem der Ansprüche 1 bis 11 umfasst.

13. Gleichrichter nach Anspruch 12, **dadurch gekennzeichnet, dass** die positiven Gleichspannungspole (Udc+) jedes Schaltzweigs miteinander verbunden sind, und die negativen Gleichspanungspole (Udc-) jedes Schaltzweigs miteinander verbunden sind, und die neutralen Gleichspannungspole (NP) jedes Schaltzweigs miteinander verbunden sind.

## Revendications

1. Branche de commutation pour un redresseur à trois niveaux, comprenant :
une première diode (D1; D11, D12, D13) et un premier commutateur à semi-conducteur (S1; S11, S12, S13) reliés en série entre un pôle de tension continue positive (Udc+) et un pôle de tension continue neutre (NP),
une deuxième diode (D2; D21, D22, D23) et un deuxième commutateur à semi-conducteur (S2; S21, S22, S23) reliés en série entre un pôle de tension continue négative (Udc-) et le pôle de tension continue neutre (NP), et
un thyristor (T; T1, T2, T3) et une troisième diode (D3, D31, D32, D33) reliés en série entre un point de connexion situé entre la première diode et le premier commutateur à semi-conducteur et un point de connexion situé entre la deuxième diode et le deuxième commutateur à semi-conducteur, un point de connexion entre le thyristor (T;
T1, T2, T3) et la troisième diode (D3, D31, D32, D33) étant relié à un pôle de tension alternative (AC; AC1, AC2, AC3) de la branche de commutation, dans laquelle la première diode (D1; D11, D12, D13) et le premier commutateur à semi-conducteur (S1; S11, S12, S13) se trouvent dans un premier module à semi-conducteur spécifique à une branche de commutation (10), et
la deuxième diode (D2; D21, D22, D23) et le deuxième commutateur à semi-conducteur (S2; S21, S22, S23) se trouvent dans un deuxième module à semi-conducteur spécifique à une branche de commutation (20), et dans lequel
soit
le thyristor (T; T1, T2, T3) est relié entre le point de connexion situé entre la première diode et le premier commutateur à semi-conducteur et le pôle de tension alternative (AC; AC1, AC2, AC3) de la branche de commutation, et
la troisième diode (D3; D31, D32, D33) est reliée entre le point de connexion situé entre la deuxième diode et le deuxième commutateur à semi-conducteur et le pôle de tension alternative (AC; AC1, AC2, AC3) de la branche de commutation,
l'anode du thyristor étant reliée à la cathode de la troisième diode,
soit
le thyristor (T; T1, T2, T3) est reliée entre le point de connexion situé entre la deuxième diode et le deuxième commutateur à semi-conducteur et le pôle de tension alternative (AC; AC1, AC2, AC3) de la branche de commutation, et
la troisième diode (D3; D31, D32, D33) est reliée entre le point de connexion situé entre la première diode et le premier commutateur à semi-conducteur et le pôle de tension alternative (AC; AC1, AC2, AC3) de la branche de commutation,
la cathode du thyristor étant reliée à l'anode de la troisième diode.

2. Branche de commutation pour un redresseur selon la revendication 1, **caractérisée en ce que** le thyristor (T; T1, T2, T3) et la troisième diode (D3, D31, D32, D33) se trouvent dans un troisième module à semi-conducteur spécifique à une branche de commutation (30).

3. Branche de commutation pour un redresseur selon l'une quelconque des revendications 1 et 2, **caractérisée en ce que** la branche de commutation comprend également :
une quatrième diode (D4; D41, D42, D43) reliée en parallèle avec le premier commutateur à semi-conducteur (S1; S11, S12, S13), et
une cinquième diode (D5; D51, D52, D53) reliée en parallèle avec le deuxième commutateur à semi-conducteur (S2; S21, S22, S23).

4. Branche de commutation pour un redresseur selon la revendication 3, **caractérisée en ce que**
la quatrième diode (D4; D41, D42, D43) se trouve dans le premier module à semi-conducteur spécifique à une branche de commutation (10), et
la cinquième diode (D5; D51, D52, D53) se trouve dans le deuxième module à semi-conducteur spécifique à une branche de commutation (20).

5. Branche de commutation pour un redresseur selon l'une quelconque des revendications 1 à 4, **caractérisée en ce que** la branche de commutation comprend également :
un troisième commutateur à semi-conducteur (S3) relié en parallèle avec la première diode, et
un quatrième commutateur à semi-conducteur (S4) relié en parallèle avec la deuxième diode.

6. Branche de commutation pour un redresseur selon la revendication 5, **caractérisée en ce que**
le troisième commutateur à semi-conducteur (S3) se trouve dans le premier module à semi-conducteur spécifique à une branche de commutation (10), et
le quatrième commutateur à semi-conducteur (S4) se trouve dans le deuxième module à semi-conducteur spécifique à une branche de commutation (20).

7. Branche de commutation pour un redresseur selon l'une quelconque des revendications 1 à 6, **caractérisée en ce que** la branche de commutation comprend également :
un moyen de commande (100) agencé pour modifier l'angle de commande du thyristor (T; T1, T2, T3) pendant la charge du circuit intermédiaire de redressement en réponse à la tension du circuit intermédiaire de redressement et à la tension d'alimentation du redresseur.

8. Branche de commutation pour un redresseur selon la revendication 7, **caractérisée en ce que** le moyen de commande (100) est agencé pour modifier l'angle de commande du thyristor (T; T1, T2, T3) en réponse à un rapport ou à une différence de la valeur de tension du circuit intermédiaire de redressement et de la valeur de tension d'alimentation du redresseur.

9. Branche de commutation pour un redresseur selon l'une quelconque des revendications 1 à 7, **caractérisée en ce que** la branche de commutation comprend également :
un moyen de charge (D_{L}, R_{L}, S_{L}) destiné à charger le circuit intermédiaire de redressement, et
un moyen de commande (100) agencé pour commander le thyristor (T; T1, T2, T3) vers l'état non conducteur pendant la charge du circuit intermédiaire de redressement.

10. Branche de commutation pour un redresseur selon l'une quelconque des revendications 7 à 9, **caractérisée en ce que** le moyen de commande (100) est agencé pour commander le thyristor (T; T1, T2, T3) en un mode de fonctionnement en diode lorsque le circuit intermédiaire de redressement n'est pas chargé.

11. Branche de commutation pour un redresseur selon l'une quelconque des revendications 7 à 10, **caractérisée en ce que** le moyen de commande (100) est agencé pour commander le thyristor (T; T1, T2, T3) vers l'état non conducteur en réponse à un état de défaut détecté.

12. Redresseur triphasée à trois niveaux qui comprend trois branches de commutation conformes à l'une quelconque des revendications 1 à 11.

13. Redresseur selon la revendication 12, **caractérisé en ce que** les pôles de tension continue positive (Udc+) de chaque branche de commutation sont interconnectés et les pôles de tension continue négative (Udc-) de chaque branche de commutation sont interconnectés, et les pôles de tension continue neutre (NP) de chaque branche de commutation sont interconnectés.
